Europäisches Patentamt

(19) European Patent Office

Office européen des brevets

(11) Publication number: **0 157 632**
**B1**

(12) **EUROPEAN PATENT SPECIFICATION**

(45) Date of publication of patent specification: **27.06.90**

(21) Application number: **85302308.3**

(22) Date of filing: **02.04.85**

(51) Int. Cl.⁵: **H 01 F 7/16,** H 02 K 33/16, H 02 K 7/14

(54) **Force motor.**

(30) Priority: **04.04.84 US 596491**

(43) Date of publication of application: **09.10.85 Bulletin 85/41**

(45) Publication of the grant of the patent: **27.06.90 Bulletin 90/26**

(84) Designated Contracting States: **DE FR GB IT**

(56) References cited:
**DE-A-2 024 024**
**DE-A-2 849 722**
**DE-A-2 919 697**

(73) Proprietor: **PARKER HANNIFIN CORPORATION**
**17325 Euclid Avenue**
**Cleveland Ohio 44112 (US)**

(72) Inventor: **Chin, Philip C.**
**8752 Dolphin Drive**
**Huntington Beach California 92646 (US)**
Inventor: **Lindsey, Charles T.**
**15191 Nantes Circle**
**Irvine California 92714 (US)**

(74) Representative: **Purvis, William Michael Cameron et al**
**D. Young & Co. 10 Staple Inn**
**London WC1V 7RD (GB)**

EP 0 157 632 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to force motors as used in fluid power systems and, more particularly, to force motors wherein electro-magnetic coils are used to bias the field strength of a permanent magnet.

Controls for hydraulic power systems have had a long history of development. Early control systems were primarily mechanical linkages. These systems were reliable, but tended to be heavy, bulky and somewhat limited in capabilities. Also, as mechanical control systems grew in size and complexity they became increasingly costly to manufacture and maintain.

As an alternative to mechanical systems, electrical control systems became increasingly popular, particularly in aviation and related fields. Electrical control systems generally could be made smaller, lighter and more versatile than mechanical systems. However, electrical control systems had other disadvantages. For example, the quiescent leakage of electro-hydraulic valves was relatively high.

Consequently, such systems required more power, generated more heat, and were generally more costly. Applications requiring redundancy in the control system, such as aviation applications, merely compounded these factors with a multiplicity of components in complex redundancy management systems.

Accordingly, it was recognized in the prior art that a mechanism that directly controlled hydraulic valves would be more efficient in terms of quiescent leakage and thus have many advantages over hydraulic control systems known in the prior art. Moreover, such use of direct drive valves would increase reliability and decrease bulk and weight of the hydraulic system. In addition, it was also recognized that direct drive valves would require only limited failure monitoring for the control system, resulting in a correlative improvement in redundancy management.

Early direct drive valves employed force motors in which a magnetic assembly comprising electrical coils was used to control the position of an armature. Subsequently the electrical coils were replaced by a permanent magnet in combination with several smaller electrical coils that were used to bias the field of the permanent magnet. It was found that this provided a magnetic assembly that was lighter and had lower power requirements than prior magnetic assemblies having no permanent magnets.

Previously, direct drive valves were developed having much-improved quiescent leakage characteristics typically in the range of 10% to 1%. One example is shown in a paper entitled "Application and Use of Rare Earth Magnets" by M. F. Marx, prepared for SAE Aerospace Control and Guidance Systems Committee, meeting No. 41, Palo Alto, California. However, several disadvantages remained in force motors known to the prior art. For example, some force motors had no mechanism for isolating the electrical coils of the magnetic assembly from the fluid of the hydraulic system. This exposure to hydraulic fluid made the magnetic assembly subject to premature failure. Other persistent problems with force motors have included a requirement for relatively high threshold command signals to initiate movement of the armature from a stationary position, as well as hysteresis in the armature movement relative to control current. These problems adversely effected the performance characteristics of the force motor, particularly sensitivity and stability.

Patent specification DE-A-20 24 024 discloses a double stroke magnet comprising an armature and magnetic coils connectable with a hydraulic valve. The armature is axially movable in a housing and is supported at both ends by respective flat springs comprising annular shaped discs with a single tongue member projecting radially inwards and provided with a central opening arranged to permit mounting on a central shaft of the armature. The tongue member of each spring is bent slightly out of the annular disc plane to provide a pre-tensioning on the armature.

Patent specification DE-A-14 14 815 discloses a somewhat similar arrangement but wherein a casing contains a permanent magnet having electrical coils on each side thereof. Energizing voltages may be applied to the coils to move the armature from a centrally located position in the casing, such location being maintained by a pair of coil springs, one disposed at each end of the armature and acting on housing end flanges.

According to the invention there is provided a force motor comprising:

a casing;

first and second pole pieces disposed at opposite ends of the casing;

a magnetic assembly located within the casing and between the pole pieces, the magnetic assembly including a permanent magnet and one or more electrical coils;

an armature that is movable between the pole pieces in response to an input signal to the magnetic assembly; and a spring assembly opposing movement of the armature from a reference position, the opposing force of the spring assembly when the armature is out of the reference position being greater than the force of the permanent magnet of the magnetic assembly with no input current to the coils;

characterised in that the armature includes a mechanical extension, the spring assembly has at least one cantilevered spring with an inner edge and the mechanical extension of the armature has a contoured surface to provide substantial line contact only between the mechanical extension and one face of the cantilevered spring at a radius adjacent the inner edge of the cantilevered spring.

The invention is diagrammatically illustrated by way of example with reference to the accompanying drawings, in which:

Figure 1 is a cross-sectional view of a direct drive valve showing a force motor according to the invention;

Figure 2 is a cross-section of the direct drive valve of Figure 1 taken on line 2-2 and showing a cantilevered spring;

Figure 3 is an enlarged partial cross-section of the direct drive valve of Figure 1 showing a portion of the spring assembly;

Figure 4 is an enlarged partial cross-section of the direct drive valve of Figure 1 showing the balls and retainers that support the armature in the tube assembly;

Figure 5 is a perspective view of the retainer of the ball and retainer assembly shown in Figures 1 and 4; and

Figure 6 shows a perspective view of an alternative embodiment of the retainer shown in Figure 5.

Referring to the drawings, a force motor 10 controls the position of a valve 12 through a direct linkage 14.

The valve 12 includes a manifold 16 that is provided with appropriate porting for connection to a hydraulic system. A valve sleeve 18 that includes metering orifices 19 is fitted within an internal bore of the manifold 16. A valve slide 20 is slidably maintained in the sleeve 18. The valve slide 20 is provided with a plurality of lands 24 and grooves 22 that, in conjunction with the metering orifices 19, control the fluid flow to the sleeve ports in accordance with the position of the valve slide 20.

The force motor 10 is connected to the valve slide 20 through the linkage 14 that includes a self-aligning joint 26. A magnetic pin 28 is provided adjacent the self-aligning joint 26 to collect metallic particles in the fluid.

The force motor 10 includes a casing 30 concentrically arranged about a magnetic assembly 32. The magnetic assembly 32 includes a permanent magnet 34 and electro-magnetic coils 36 and 38. The coils 36 and 38 are circumferentially wound and contained in annular frames 40 and 42. The coils are electrically connected in series or in parallel with the number of coil turns being determined, in part, by the strength of the permanent magnet 34.

Also included in the force motor 10 are pole pieces 44 and 46 respectively located on opposite ends of the casing 30 and the magnetic assembly 32. A tube assembly 47 is sleeved within the magnetic assembly 32 and between the pole pieces 44 and 46. The tube assembly 47 includes a magnetic central band 47a that engages longitudinally aligned, non-magnetic outer bands 47b and 47c on opposite ends thereof. An armature 48 is located adjacent to the magnetic assembly 32 within the tube assembly 47 and between the pole pieces 44 and 46. The armature 48 is movable between the pole pieces 44 and 46.

A rod 50 extends longitudinally through the armature 48 and is secured to the end faces of the armature 48 by retainers 52 and 54. The rod 50 is connected at one end to the self-aligning joint 26 of the direct linkage 14. At the opposite end the rod 50 extends from the armature 48 into a chamber 56 that is defined by an annular spacer 58 in co-operation with a cover 60. The cover 60 engages one end of a housing 61 that supports the casing 30 and the pole pieces 44 and 46. A plurality of passageways 51 extend longitudinally through the armature 48 such that the chamber 56 is in fluid communication with the valve 12 by a flow path through the passageways 51 and around the retainers 52 and 54 and the direct linkage 14.

An o-ring 62a is provided between the outer band 47b and the pole piece 44 and an o-ring 62b is provided between the outer band 47c and the pole piece 46. The o-rings 62a and 62b form a seal between the tube assembly 47 and the pole pieces 44 and 46 and co-operate with the tube assembly 47 and the pole pieces 44 and 46 to isolate the magnetic assembly 32 from hydraulic fluid surrounding the armature 48.

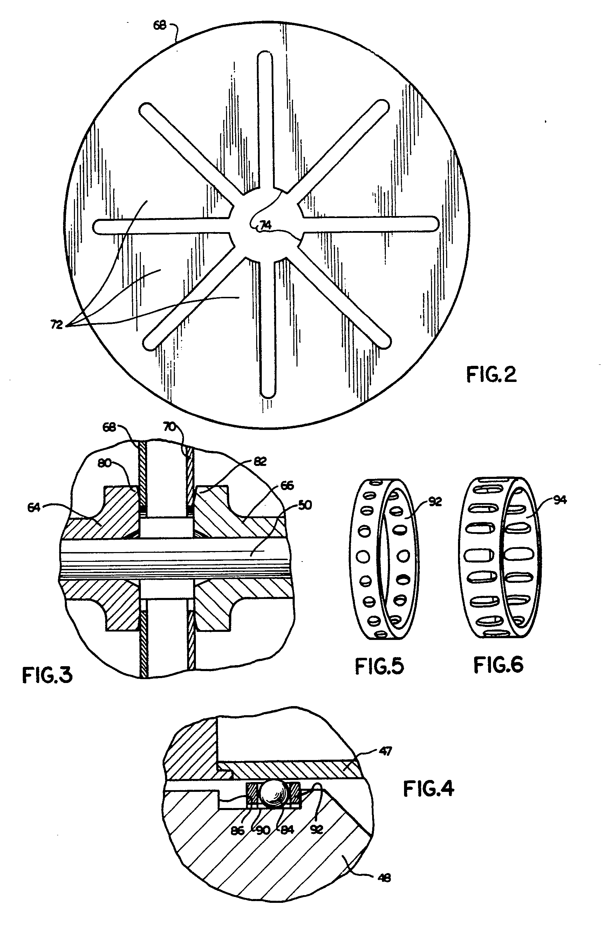

In the chamber 56, the rod 50 is connected to spacers 64 and 66 which co-operate with the rod 50 to form a mechanical extension of the armature 48 that mechanically couples the armature to a spring assembly 62. The spring assembly 62 includes cantilevered springs 68 and 70 which are maintained in spaced-apart, parallel relationship by an annular spacer 76. As particularly shown in Figure 2, the springs 68 and 70 are each provided with a plurality of triangularly shaped petals 72 that are circumjacently arranged along an inner edge 74. The spring assembly 62 is secured in cantilevered fashion against a shoulder 78 of the cover 60 by compression between the shoulder 78 and the annular spacer 58. As specifically used herein, the springs 68 and 70 are "cantilevered" in that they are secured adjacent the perimeter and flexed from a point adjacent the inner edge 74.

As best shown in Figure 3, the faces of the spacers 64 and 66 adjacent the opposing faces of the springs 68 and 70 respectively are provided with annular extensions such as annular flanges 80 and 82. The annular flanges 80 and 82 contact the respective opposing face of the springs 68 and 70 at a location adjacent the inner edge 74. The contact surfaces of the annular flanges 80 and 82 are contoured such that contact between the annular flanges 80 and 82 and the springs 68 and 70 is substantially line contact. In Figure 3, the cross-sectional view of the contact surfaces of the flanges 80 and 82 shows that they are respectively radiused such that the contact between the flanges 80 and 82 and the springs 68 and 70 is substantially circular, line contact. More specifically, in the preferred embodiment, the contact surfaces of the flanges 80 and 82 are located at a continuous radius.

As particularly shown in Figures 4 and 5, a plurality of balls 84 supports the armature 48 concentrically within the magnet assembly 32 and the tube assembly 47 in a longitudinally movable manner. In the preferred embodiment, the armature 48 is provided with annular grooves 86 and 88 having base surfaces 90 and 91. The balls 84 contact the base surfaces 90 and 91 and the tube assembly 47 to maintain the armature 48 in a fixed radial position within the tube assembly 47 such that it is substantially aligned with the longitudinal central axis of the magnetic assembly 32.

The balls 84 are circumferentially maintained in regularly spaced relationship in the annular grooves 84 and 88 by retainers 92 and 93 respectively. The retainers 92 and 93 are provided with a plurality of regularly spaced holes each corresponding to a respective ball. The radial thickness of the retainers 92 and 93 is such that the balls 84 located in the respective holes of the retainer protrude radially through the sides thereof and contact the tube assembly 47 and the base surfaces 90 and 91 of the armature 48. The width of the retainers 92 and 93 is narrower than the width of the grooves 86 and 88. Further, the width of the retainers 92 and 93 is sized with respect to the stroke of the armature 48 such that, as the armature 48 moves between the pole pieces 44 and 46, the retainers 92 and 93 move freely between the sidewalls of the annular grooves 86 and 88.

Figure 6 shows an alternative embodiment of a retainer for the balls 84. In that embodiment, a retainer 94 is provided with elongate holes corresponding to the respective balls 84. In contrast to the retainer 92 of Figure 5, the retainer 94 is secured to the armature 48 and does not move freely with respect thereto. Instead, the major axes of the elongate holes are generally aligned with the longitudinal movement of the armature 48 and, as the armature 48 moves between the pole pieces 44 and 46, the balls 84 traverse the elongate holes. The width of the retainer 94 and the dimension of the elongate holes along their major axis is sized with respect to the stroke of the armature 48. Thus, as the armature 48 moves between the pole pieces 44 and 46, the balls 84 move freely along the elongate holes.

In the operation of the preferred embodiment, the armature 48 is connected through the direct linkage 14 to the valve slide 20. Thus, the movement of the armature 48 results in a corresponding movement of the valve slide 20 to determine the flow of fluid through the valve 12. The force motor 10 controls the position of the armature 48 by balancing the magnetic force exerted on the armature 48 by the magnetic assembly 32 against the opposing spring force of the spring assembly 62.

The magnetic assembly 32 provides a magnetic field having a permanent field component and a variable field component. The nonmagnetic outer bands 47b and 47c of the tube assembly 47 cooperate with the central band 47a to channel the magnetic field through the end of the armature 48 and the pole pieces 44 and 46. The permanent field component of the magnetic assembly 32 is developed by the permanent magnet 34 and the variable field component is developed by the coils 36 and 38. Thus, the electric current to the coils 36 and 38 is controlled to bias the field of the magnetic assembly 32.

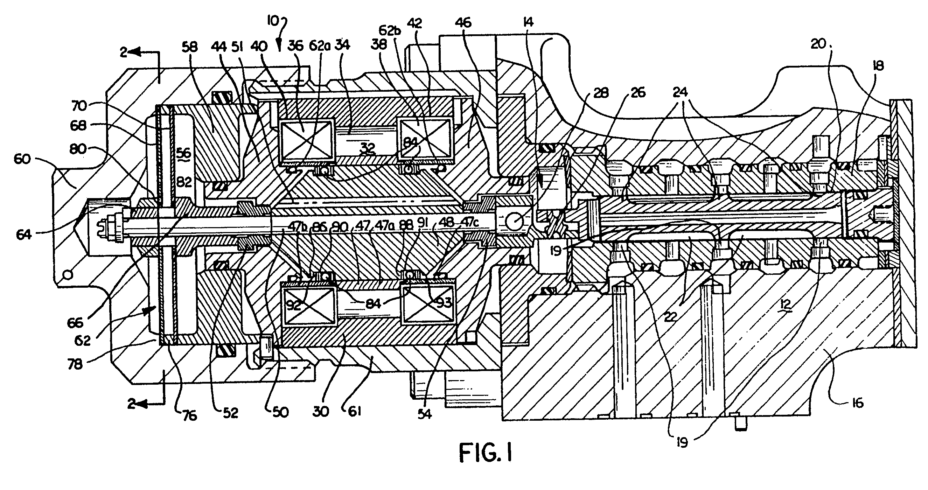

The spring force of the spring assembly 62 is greater than the magnetic forces between the armature 48 and the pole pieces 44 and 46 resulting from the permanent field component of the permanent magnet 34 alone. Thus, with no input current to the coils 36 and 38 of the magnet assembly 32, the spring assembly 62 maintains the armature 48 at a reference position as shown in Figure 1. However, when input current is supplied to the coils 36 and 38 of the magnet assembly 32, the spring assembly 62 maintains the armature 48 at a reference position as shown in Figure 1. However, when input current is supplied to the coils 36 and 38, the magnetic field of the magnetic assembly 32 is biased such that the force between the armature 48 and the pole pieces 44 and 46 exceeds the force of the spring assembly 62 at the reference position. The armature 48 then moves toward the pole piece 44 or 46 in accordance with the magnetic field bias as determined by the magnitude and direction of current flowing in the coils 36 and 38.

As the armature 48 moves from the reference position, the spring force of the spring assembly 62 increases substantially in proportion to the mechanical displacement of the spring 68 and 70 until an equilibrium position is established at which the magnetic forces between the armature 48 and the pole pieces 44 and 46 are balanced by the spring force. Thus, the position of the armature 48 is determined by the input current to the magnetic assembly 32.

As specifically shown in Figure 2, to provide redundancy in the spring assembly 62, the cantilevered springs 68 and 70 each include the plurality of triangularly shaped petals 72. The petals 72 are of an angular size such that the loss of a specified number of petals does not substantially effect the spring force of the spring assembly 62 with respect to displacement of the springs 68 and 70.

To limit the required thickness of the springs 68 and 70 and to increase the sensitivity of the spring assembly 62 in view of the petal structure of springs 68 and 70, two springs are used in complementary arrangement. In response to movement of the armature 48, the springs 68 and 70 are each loaded in only one direction against their respective spacer 64 or 66. Specifically, as the armature 48 moves from the reference position in a direction away from valve 12, the spring 70 operates against the spacer 66 to oppose this movement and the spring 68 moves out of contact with spacer 64. Conversely, as the armature 48 moves from the reference position in a direction toward the valve 12, the spring 70 moves away from the spacer 66, but the spring 68 operates against the spacer 64 to oppose the armature movement.

The use of the two springs 68 and 70 in complementary fashion permits the springs to be preloaded against the spacers 64 and 66 such that the reference position of the armature 48 can be precisely established by adjustment of the location of the spacers 64 and 66 on the rod 50. Thus the mechanical extension between the armature 48 and the spring assembly 62 provides for adjustment to compensate for variations within tolerances, in the spring assembly 62 and elsewhere in the force motor 10.

The force motor of the invention can have low threshold friction and low mechanical hysteresis. Fluid at the end of the armature 48 that is adjacent the linkage 14 communicates through the passageways 51 with the opposite end of the armature 48, the chamber 56, and the spring assembly 62. Thus, no dynamic seals are required between the armature 48 and the tube assembly 47, eliminating the frictional effects of any dynamic fluid seal on the armature.

As specifically shown in the cross-sectional view of Figure 3, further to limit threshold friction in the force motor, the flanges 80 and 82 of the spacers 64 and 66 are contoured on a continuous radius. The contour of the flanges 80 and 82 permits the springs 68 and 70 to roll on the surface of the flanges 80 and 82 forming substantially line contact therewith. This limits high friction forces due to sliding movement between the spacers 64 and 66 and the springs 68 and 70 upon movement of the armature 48 and results in more linear, even movement of the armature 48. If the spacers 64 and 66 were contoured to have a non-continuous radius cross-section this would further limit sliding between the spacers 64 and 66 and the springs 68 and 70. However, due to the expense and difficulty of manufacturing flanges having such a non-continuous radius, the continuous radius is disclosed as the presently preferred embodiment.

The balls 84 are circumferentially maintained in the retainers 92 and 93 as shown in Figures 1 and 4 or, alternatively, in the retainer 94 shown in Figure 6. Thus, the balls 84 maintain the armature 48 concentrically within the tubular assembly 47 and concentrically within the magnetic assembly 32. The balls 84, which contact both the tubular assembly 47 and the armature 48, operate as free-rolling guides for the armature. Thus the balls 84 also operate in a manner that limits frictional effects on the armature 48 and produces more linear movement and greater sensitivity of the force motor 10 in response to input current.

Attention is directed to co-pending applications 85302306.7 published under number EP-A-0 157 630 and 85302307.5 published under number EP-A-0 157 631, which has substantially the same disclosure as this application but claims of different scope.

## Claims

1. A force motor comprising:
   a casing (30);
   first and second pole pieces (44, 46) disposed at opposite ends of the casing (30);
   a magnetic assembly (32) located within the casing (30) and between the pole pieces (44, 46), the magnetic assembly (32) including a permanent magnet (34) and one or more electrical coils (36, 38);
   an armature (48) that is movable between the pole pieces (44, 46) in response to an input signal to the magnetic assembly (32); and a cantilever spring assembly (62) opposing movement of the armature (48) from a reference position, the opposing force of the spring assembly (62) when the armature (48) is out of the reference position being greater than the force of the permanent magnet (34) of the magnetic assembly (32) with no input current to the coils (36, 38);

characterised in that the armature (48) includes a mechanical extension (50, 64, 66), the spring assembly (62) has at least one cantilevered spring (68, 70) with an inner edge (74) and the mechanical extension (50, 64, 66) of the armature (48) has a contoured surface to provide substantial line contact only between the mechanical extension (64, 66) and one face of the cantilevered spring (68, 70) at a radius adjacent the inner edge (74) of the cantilevered spring (68, 70).

2. A force motor according to claim 1, wherein the mechanical extension includes a spacer (64, 66) having an annular flange (80, 82) that provides the contoured surface.

3. A force motor according to claim 2, wherein the contoured surface of the annular flange (80, 82) has a constant radius of curvature.

## Patentansprüche

1. Ein Elektromagnetventil, enthaltend:
   ein Gehäuse (30),
   erste und zweite Polstücke (44, 46), die an gegenüberliegenden Enden des Gehäuses (30) angeordnet sind,
   eine Magneteinheit (32), die im Innern des Gehäuses (30) und zwischen den Polstücken (44, 46) angeordnet ist, wobei die Magneteinheit (32) einen Dauermagneten (34) und eine oder mehrere elektrische Spulen (36, 38) enthält,
   einen Anker (48), der als Reaktion auf ein Eingangssignal an die Magneteinheit (32) zwischen den Polstücken (44, 46) beweglich ist, und eine einseitig eingespannte Federeinheit (62), die der Bewegung des Ankers (48) aus einer Bezugsposition entgegenwirkt, wobei die entgegenwirkende Kraft der Federeinheit (62), wenn sich der Anker (48) nicht in Bezugsposition befindet, größer ist als die Kraft des Dauermagneten (34) der Magneteinheit (32), während die Spulen (36, 38) keinen Stromeingang aufweisen,
   dadurch gekennzeichnet, daß der Anker (48) eine mechanische Verlängerung (50, 64, 66) enthält, die Federeinheit (62) wenigstens eine einseitig eingespannte Feder (68, 70) mit einer Innenkante (74) besitzt und die mechanische Verlängerung (50, 64, 66) des Ankers (48) eine mit Kontur versehene Oberfläche aufweist, um im wesentlichen einen Leitungskontakt nur zwischen der mechanischen Verlängerung (64, 66) und einer Vorderseite der einseitig eingespannten Feder (68, 70) an einem Radius herzustellen, der an die Innenkante (74) der einseitig eingespannten Feder (68, 70) angrenzt.

2. Ein Elektromagnetventil nach Anspruch 1, wobei die mechanische Verlängerung ein Abstandselement (64, 66) mit ringförmigem Flansch (80, 82) zur Bildung der Kontur-Oberfläche enthält.

3. Ein Elektromagnetventil nach Anspruch 2, wobei die Kontur-Oberfläche des Ringflanschs (80, 82) einen gleichbleibenden Krümmungshalbmesser aufweist.

**Revendications**

1. Moteur d'électrovanne comportant:
un carter (30)
une première et une seconde pièces polaires (44, 46) prévues aux extrémités opposées du carter (30),
un ensemble magnétique (32) logé dans le carter (30) et entre les pièces polaires (44, 46), l'ensemble magnétique (32) étant formé d'un aimant permanent (34) et d'un ou plusieurs enroulements électriques (36, 38),
un induit (48) mobile entre les pièces polaires (44, 46) en fonction d'un signal d'entrée appliqué à l'ensemble magnétique (32) et un ensemble à ressorts encastrés (62) s'opposant au mouvement de l'induit (48) à partir d'une position de référence, les forces antagonistes exercées par l'ensemble à ressorts (62) lorsque l'armature (48) est en dehors de la position de référence, étant supérieures à la force de l'aimant permanent (34) exercée par l'ensemble magnétique (32) lorsque les enroulements (36, 38) ne sont transformés par aucun courant d'entrée,
moteur caractérisé en ce que l'induit (48) se compose d'un prolongement mécanique (50, 64, 66), l'ensemble à ressorts (62) ayant au moins un ressort encastré (68, 70) avec un bord intérieur (74) et le prolongement mécanique (50, 64, 66) de l'induit (48) ayant une surface de contour pour assurer un contact pratiquement linéaire seulement entre le prolongement mécanique (64, 66) et une face du ressort encastré (68, 70) sur un rayon adjacent du bord interne (74) du ressort encastré (68, 70).

2. Moteur d'électrovanne selon la revendication 1, caractérisé en ce que le prolongement mécanique comporte un organe d'écartement (64, 66) ayant une bride annulaire (80, 82) qui forme la surface de contour.

3. Moteur d'électrovanne selon la revendication 2, caractérisé en ce que la surface de contour de la bride annulaire (80, 82) présente un rayon de courbure constant.

FIG. I

FIG.2

FIG.3

FIG.5    FIG.6

FIG.4